# EUROPEAN PATENT APPLICATION

(11) **EP 4 481 976 A1**
(43) Date of publication of application: **25.12.2024**
(21) Application number: 24182228.7
(22) Date of filing: 14.06.2024
(51) Int. Cl.: H02J 3/32, B60L 55/00, H02J 7/34

(54) **BI-DIRECTIONAL BATTERY CHARGING SYSTEM FOR ONE OR MORE TRANSPORT REFRIGERATION UNIT**

(30) Priority: 16.06.2023 US 202363508689 P
(71) Applicant: Carrier Corporation, Palm Beach Gardens, FL 33418 (US)
(72) Inventor: CHAROULET, Guillaume, Rouen (FR); BEAUFRERE, Florian, Rouen (FR)
(74) Representative: Dehns

(57) **Abstract**

A bi-directional battery charging system (100) for a first transport refrigeration unit (TRU) (102) is disclosed. The bi-directional battery charging system (100) comprises a bi-directional charger (112) operatively connected to a controller (110) and a battery (106) associated with the first TRU (102), wherein the bi-directional charger (112) is configured to be electrically connected to an external electrical component selected from the group of an electrical grid (114), a battery (120) associated with second TRUs (118), and a battery associated with vehicles.

## Description

### CROSS-REFERENCE TO RELATED APPLICATION

This patent application claims the benefit of US Provisional Patent Application No. 63/508,689, filed on Jun 16, 2023, which is incorporated by reference herein in its entirety.

### BACKGROUND

This invention relates to transport refrigeration units and battery management systems.

Transport refrigeration units (TRUs) may be used to conserve and maintain the temperature of perishable goods during transportation. Battery-powered TRUs may generally be employed for storing and transporting perishable goods while restricting emissions and lowering environmental impact. However, the battery associated with a battery-powered TRU may run low, which may affect the stored goods. Moreover, the charging system of existing battery-powered TRU may allow the battery to recharge only through an external power supply which may not be available at all places.

### SUMMARY

According to a first aspect of the invention there is provideda first transport refrigeration unit (TRU) comprising a bi-directional battery charging system. The bi-directional battery charging system comprises a bi-directional charger operatively connected to a controller and a battery associated with the first TRU, wherein the bi-directional charger is configured to be electrically connected to an external electrical component selected from the group consisting of an electrical grid, a battery associated with a second TRU, a battery associated with a vehicle, and combinations thereof.

According to a second aspect of the invention there is provided a bi-directional battery charging system for a first transport refrigeration unit (TRU), the bi-directional battery charging system comprising: a bi-directional charger operatively connected to a controller and a battery associated with the first TRU, wherein the bi-directional charger is configured to be electrically connected to an external electrical component selected from the group of an electrical grid, a battery associated with a second TRU, a battery associated with vehicles, and a combination thereof.

Optionally, in a first mode, the bi-directional charger enables supply of electrical power from the external electrical component to the battery associated with the first TRU.

Optionally, in a second mode, the bi-directional charger enables supply of electrical power from the battery associated with the first TRU to the external electrical component.

Optionally, the bi-directional charger comprises an AC to DC (ADC) converter configured to convert AC electrical power received from the external electrical component into DC electrical power for the battery associated with the first TRU, and a DC to AC (DAC) converter configured to convert DC electrical power supplied by the battery associated with the first TRU into AC electrical power for the external electrical component.

Optionally, the bi-directional charger comprises one or more AC to AC converters configured to convert AC electrical power having first electrical attributes received from the external electrical component into AC electrical power having second electrical attributes for the battery associated with the first TRU, and convert AC electrical power having the second electrical attributes supplied by the battery associated with the first TRU into AC electrical power having first electrical attributes for the external electrical component.

Optionally, the bi-directional charger comprises one or more DC to DC converters configured to convert DC electrical power having first electrical attributes being received from the external electrical component into DC electrical power having second electrical attributes for the battery associated with the first TRU, and convert DC electrical power having the second electrical attributes supplied by the battery associated with the first TRU into DC electrical power having first electrical attributes for the external electrical component.

Optionally, the bi-directional battery charging system comprises a battery management system (BMS) associated with the TRU, wherein the BMS comprises a DAC converter configured to convert DC electrical power supplied by the bi-directional charger into AC electrical power for one or more components of the first TRU and the battery associated with the first TRU.

Optionally, the BMS comprises an ADC converter to convert AC electrical power supplied by the bi-directional charger into DC electrical power for one or more components of the TRU and the battery associated with the first TRU.

In one or more embodiments, the BMS comprises one or more sensors to: monitor a battery level of the battery associated with the first TRU; monitor a battery level of a battery associated with the external electrical component when electrically connected to the bi-directional charger of the TRU; or monitor both battery levels.

Optionally, the BMS of the TRU is communicatively coupled to a first human-machine interface (HMI) device associated with a user of the first TRU, wherein the first HMI device enables the user of the first TRU to: monitor the battery level of the battery associated with the first TRU: monitor a battery level of a battery associated with the external electrical component when electrically connected to the bi-directional charger of the TRU; and switch the bi-directional charger between the first mode and the second mode.

Optionally, the first HMI device enables the user of the first TRU (the first user) to transmit to a second HMI device associated with a user of the external electrical component (the second user), a first set of signals pertaining to a request for supplying electrical power from the external electrical component to the battery associated with the first TRU, and/or receive, from the second HMI device, a second set of signals pertaining to a request for supplying electrical power from the battery associated with the first TRU to the external electrical component.

According to a third aspect of the invention there is provided a system for enabling bi-directional charging in two or more transport refrigeration units (TRUs). The system comprises a server, and two or more TRUs, each comprising a battery, a controller, and a bi-directional charger operatively connected to the battery and the controller, wherein the controller associated with each of the two or more TRUs is in communication with the server, wherein the bi-directional charger associated with each of the two or more TRUs is configured to be electrically connected to the bi-directional charger associated with remaining TRUs.

Optionally, the bi-directional charger of each of the two or more TRUs is configured to be electrically connected to an external electrical component selected from the group consisting of an electrical grid, a battery associated with a vehicle, and a combination thereof.

Optionally, the server is configured to operate the bi-directional charger of the two or more TRUs in a first mode, wherein the bi-directional charger enables the battery of the corresponding TRU to receive electrical power from the external electrical component, the battery associated with any of the remaining TRUs, or both.

Optionally, the server is configured to operate the bi-directional charger of the two or more TRUs in a second mode, wherein the bi-directional charger enables the battery of the corresponding TRU to supply electrical power to the external electrical component, the battery associated with any of the remaining TRUs, or both.

Optionally, the server is in communication with a battery management system of the TRU and configured to monitor a battery level associated with each of the two or more TRUs, wherein the server enables the transfer of electrical power between the two or more TRUs at a charging station, based on the battery level associated with each of the one or more TRUs.

Optionally, the server enables a first HMI device associated with a user of a first set of TRUs among the two or more TRUs having a battery level above a first level to transmit, to a second HMI device of a user associated with a second set of TRUs among the two or more TRUs having a battery level below the first level, a first set of signals pertaining to a location of the corresponding first TRU, and a request for supplying the electrical power from the battery of the corresponding first TRU to the battery of the corresponding second TRU.

Optionally, the server enables the second HMI device associated with the second set of TRUs, to transmit a second set of signals pertaining to a location of the corresponding second TRU, and a confirmation for supplying the electrical power in response to the request.

Optionally, the server enables the first HMI device associated with the first set of TRUs to transmit, to one or more third HMI devices associated with the external electrical component, a third set of signals pertaining to a request for supplying electrical power from the external electrical component to the battery associated with the first set of TRUs, and/or receive, from the one or more third HMI devices, a fourth set of signals pertaining to a location of the external electrical component and a confirmation for supplying the electrical power in response to the request.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention by way of example only and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A to 1C show a bi-directional charging system implemented in a transport refrigeration unit (TRU) associated with a cargo truck or vehicle.
FIGs. 2, 3A, and 3B show the network architecture of a system for enabling bi-directional charging between one or more TRUs and an electric grid.
FIGs. 4A to 4C show a block diagram of one or more bi-directional charger associated with the bi-directional charging system.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications and alternatives falling within the scope of the invention as set out in the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the disclosure, the components described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

Trailer refrigeration units (TRUs) may be employed with containers or trailers to supply conditioned air within the corresponding container for maintaining a conditioned environment inside the storage space of the container. Various goods including but not limited to pharmaceutical and nutraceutical products, and perishable items such as foods and beverages may be stored and transported in the containers equipped with the TRU. Battery-powered TRUs may be employed for conserving and transporting goods, lowering emissions and the environmental impact that may be caused by diesel-powered TRUs, and the like. However, the battery associated with battery-powered TRU may run low, which may affect the stored goods. Moreover, the charging system of existing battery-powered TRU may allow the battery to recharge only through an external power source that may not be available at all places. Accordingly, there is a need to provide a system for more versatile charging option for the battery of a TRU.

This invention addresses the aforementioned needs of battery-powered TRUs, by providing an improved, cost-effective, and efficient battery charging system for battery-powered TRUs, which enables the TRU to receive electrical power from an electrical grid as well as from a battery associated with other TRUs and non-TRU equipped vehicles. Additionally, the battery charging system further allows the TRU to resell or supply the electrical power (stored in the battery) to the electric grid, and/or to a battery associated with other TRUs and non-TRU vehicles.

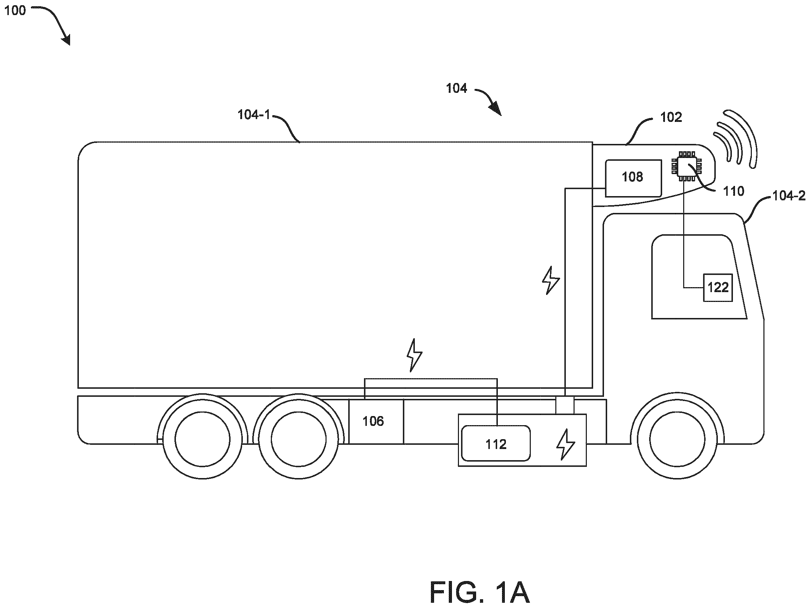

Referring to FIGs. 1A to 2, a bi-directional battery charging system 100 for a battery-powered transport refrigeration unit (TRU) 102 (also referred to as first TRU, herein) is disclosed. The TRU 102 may be installed on a container or trailer 104-1 associated with a vehicle 104. The TRU 102 may include a battery 106 to operate/run the TRU 102 for maintaining a conditioned environment in an enclosed (storage or conservation) space within the container/trailer 104-1. Various products including but not limited to pharmaceutical and nutraceutical products, and perishable items such as foods and beverages, and the like may be stored and transported in the container/trailer 104-1. The TRU 102 may maintain the environment of the storage space at a specific or user-defined temperature and/or humidity, based on the stored products, to keep the stored products in a desired condition while transporting and comply with product compliance regulations.

The TRU 102 may be installed on the container/trailer 104 associated with one or more vehicles 104 including but not limited to an electric truck, a semi-electric truck, and a non-electric truck such that the TRU 102 remains fluidically connected to the ambient and further remains fluidically connected to the storage space of the container/trailer 104-1. However, the TRU 102 of the vehicles 104 may be battery-powered, which may receive electrical power from the battery 106. Accordingly, based on the environment to be maintained in the storage space or based on the products to be transported, the TRU 102 may be operated to adjust its cooling capacity and supply conditioned air within the storage space.

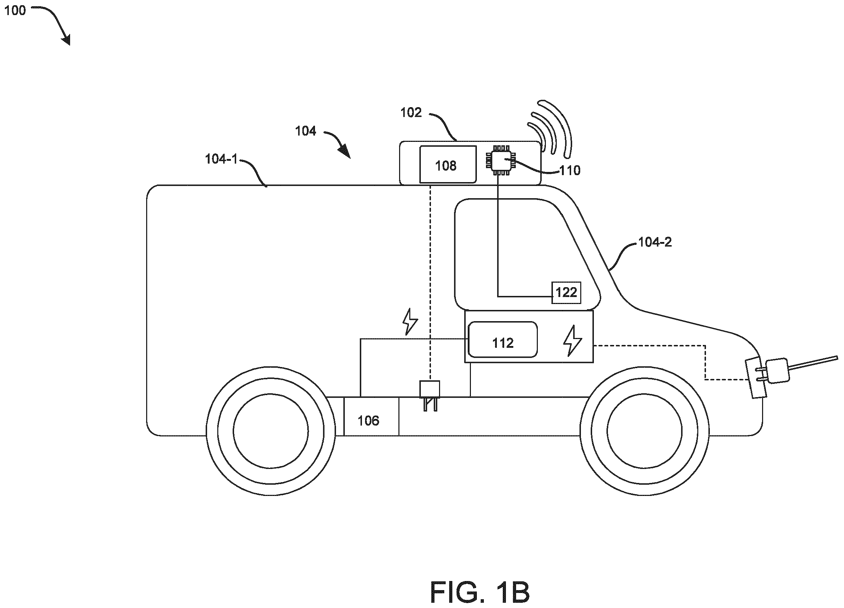

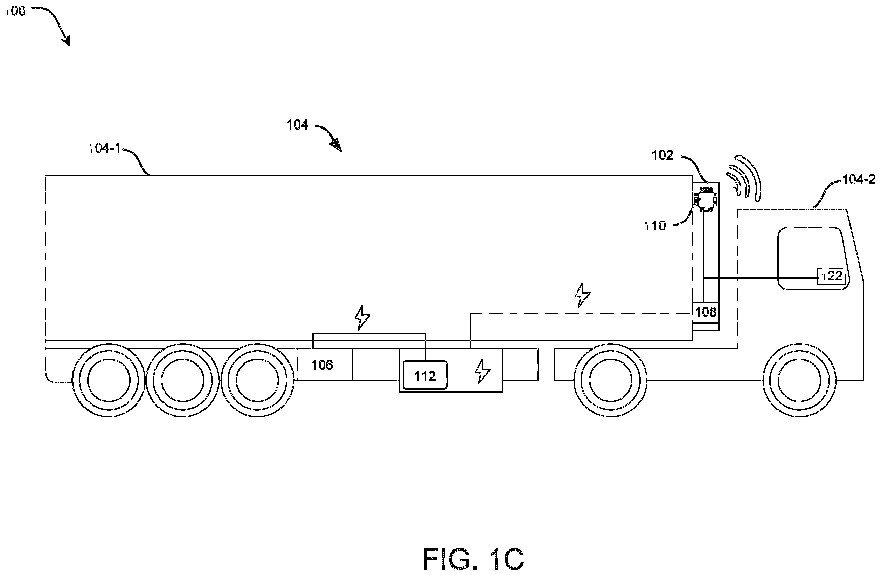

In one or more embodiments, the container/trailer 104-1 may be coupled to a rear end of a cab or truck 104-2 associated with the cargo truck/vehicle 104 such that a gap remains therebetween. The TRU 102 may be coupled to the front end (F) of the container/trailer 104-1 in the gap area between the cab 104-2 and container/trailer 104-1 as shown in FIGs. 1A and 1C, with the outlet port in fluidic communication with the storage space of the container/trailer and the inlet port in fluidic communication with the ambient or the storage space. In some embodiments, the TRU 102 may be configured on top of the container 104-1 or cab 104-2 associated with the vehicle 104 as shown in FIG. 1B such that the outlet port of TRU 102 remains in fluidic communication with the storage space of the container/trailer 104-1 and the inlet port in fluidic communication with the ambient or the storage space. Alternatively, (not shown) the TRU 102 can be coupled to a prescribed position on a side or more than one side of the container/trailer 104-1. Moreover, (not shown) a plurality of TRUs can be coupled to a single container/trailer. Alternatively, a single TRU can be coupled to a plurality of containers/trailers.

In one or more embodiments, the bi-directional battery charging system 100 may include an existing battery management system 108 associated with the vehicle 104 or TRU 102. The battery 106 of the TRU 102 may be electrically coupled to the one or more components of the TRU 102 via the BMS 108. The BMS 108 may be configured to monitor the battery level of the TRU 102 and further control the charging of the battery 106 as well as the supply of electrical power from the battery 106 to the one or more components of the TRU 102 or vehicle 104. The TRU 102 may further include a controller 110 in communication with the battery 106, the BMS 108, and a vapor compression system/refrigeration circuit of the TRU 102.

In one or more embodiments, the controller 110 may be a control unit of the TRU 102. Further, in some embodiments, the controller 110 may be in communication with a control unit associated with the TRU 102 or the BMS 108. The controller 110 may be configured to control the vapor compression system or the refrigeration circuit and/or fans associated with the TRU 102 to adjust the cooling capacity of the TRU 102, based on products being transported and the real-time environment of the storage space, thereby maintaining a conditioned environment across the storage space.

The bi-directional battery charging system 100 of the first TRU 102 may include a bi-directional charger 112 operatively connected to the controller 110 and the battery) 106 associated with the first TRU 102. The bi-directional charger 112 may be adapted to be electrically connected to an external electrical component selected from a group comprising an electrical grid 114 associated with one or more electrical power entities, a battery 120 associated with second TRU 118 associated with second vehicles 116, and a battery associated with non-TRU vehicles (not shown).

In one or more embodiments, in a first (charging) mode, the bi-directional charger 112 may enable the supply of electrical power from the external electrical component such as the electrical grid 114 associated with electrical power entities, battery 120 associated with the second TRU 118 (associated with the second vehicle 116), a battery associated with non-TRU vehicles or a combination thereof to the battery 106 associated with TRU 102, thereby enabling the charging of the battery 106 associated with TRU 102. Further, in one or more embodiments, in a second (energy reselling) mode, the bi-directional charger 112 may enable the supply of electrical power from the battery 106 associated with TRU 102 to the electrical grid 114, the battery 120 associated with the second TRU 118, the battery associated with non-TRU vehicles, and a combination thereof.

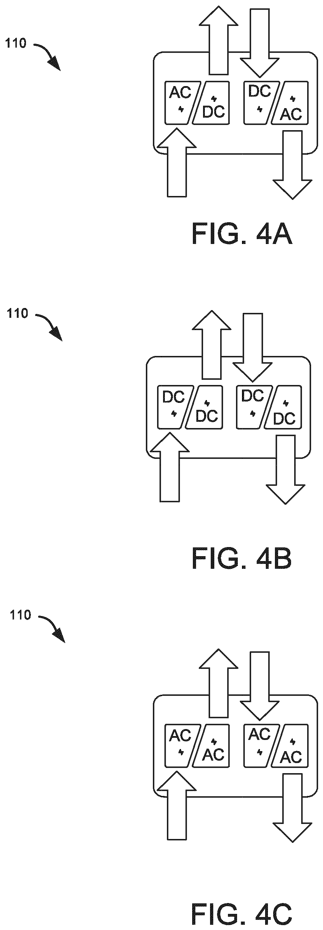

In one or more embodiments, referring to FIG. 4A, the bi-directional charger 112 may include an AC to DC (ADC) converter that may be configured to convert AC electrical power received from the external electrical component (the electrical grid 114, the battery 120 of the second TRU 118, and the battery of the vehicle) into DC electrical power for the battery associated with the first TRU 106 when the bi-directional charger 112 of the TRU 102 is operating in the first mode. The bi-directional charger 112 may further include a DC to AC (DAC) converter that may be configured to convert DC electrical power supplied by the battery associated with the first TRU 106 into AC electrical power for the external electrical component (electrical grid 114, the battery 120 of second TRU 118, and the battery of the vehicle when the bi-directional charger 112 of the TRU 102 is operating in the second mode.

In one or more embodiments, referring to FIG. 4B, the bi-directional charger 112 may include one or more AC to AC converters configured to convert AC electrical power having first electrical attributes being received from the external electrical component into AC electrical power having second electrical attributes for the battery associated with the first TRU 106 when the bi-directional charger 112 of the TRU 102 is operating in the first mode. The AC to AC converter may further convert AC electrical power having the second electrical attributes supplied by the battery associated with the first TRU 106 into AC electrical power having first electrical attributes for the external electrical component when the bi-directional charger 112 of the TRU 102 is operating in the second mode.

In one or more embodiments, referring to FIG. 4C, the bi-directional charger 112 may include one or more DC to DC converters configured to convert DC electrical power having first electrical attributes being received from the external electrical component into DC electrical power having second electrical attributes for the battery associated with the first TRU 106 when the bi-directional charger 112 of the TRU 102 is operating in the first mode. The DC to DC converter may further convert DC electrical power having the second electrical attributes supplied by the battery associated with the first TRU 106 into DC electrical power having first electrical attributes for the external electrical component when the bi-directional charger 112 of the TRU 102 is operating in the second mode.

In one or more embodiments, the bi-directional charger 112 may be a power electronic device comprising power electronics semiconductor devices forming one or more of an inverter, a rectifier, a power converter, and the like to create one or more of the ADC converter, DAC converter, AC to AC converter, and DC to DC converter for the bi-directional charger 112. The bi-directional charger 112 may further include connection interfaces such as but not limited to connectors and cables that may physically and electrically connect the bi-directional charger 112 of the TRU 102 to the electrical grid 114, the second battery 120 of second TRUs 118, and battery of other non-TRU vehicles. The bi-directional charger 112 may further include fuses, circuit breakers, and other protective devices. In one or more embodiments, the protective devices may include but are not limited to an over-charging protection module, an over-heating protection module, a surge protection module, an overcurrent protection module, and an over-voltage protection module.

In one or more embodiments, the BMS 108 may include a DAC converter configured to convert DC electrical power supplied through the bi-directional charger 112 into AC electrical power for one or more components of the TRU 102 and the battery associated with the first TRU 106. Further, in one or more embodiments, the BMS 108 may include an ADC converter to convert AC electrical power supplied through the bi-directional charger 112 into DC electrical power for one or more components of the TRU 102 and the battery associated with the first TRU 106.

In one or more embodiments, the BMS 108 and/or the bi-directional charger 112 may include one or more electrical sensors including a current sensor, voltage sensor, power sensor, and the like, to monitor the battery level of the battery associated with the first TRU 106 and also monitor the battery level of the second battery 120 and/or the third battery of the second TRUs 118 and/or the vehicle, respectively, when electrically connected to the bi-directional charger 112 of the TRU 102.

The BMS 108 or the bi-directional charger 112 may be adapted to be communicatively coupled to a human-machine interface (HMI) device 122 (first HMI device) associated with a user (first user) of the TRU 102. The first HMI device 122 may enable the first user to monitor the battery level of the battery associated with the first TRU 106 and monitor the battery level of the second battery 120, and/or the third battery when electrically connected to the bi-directional charger 112 of the first TRU 102. Further, the first HMI device 122 may allow the first user to switch the bi-directional charger 112 between the first mode and the second mode.

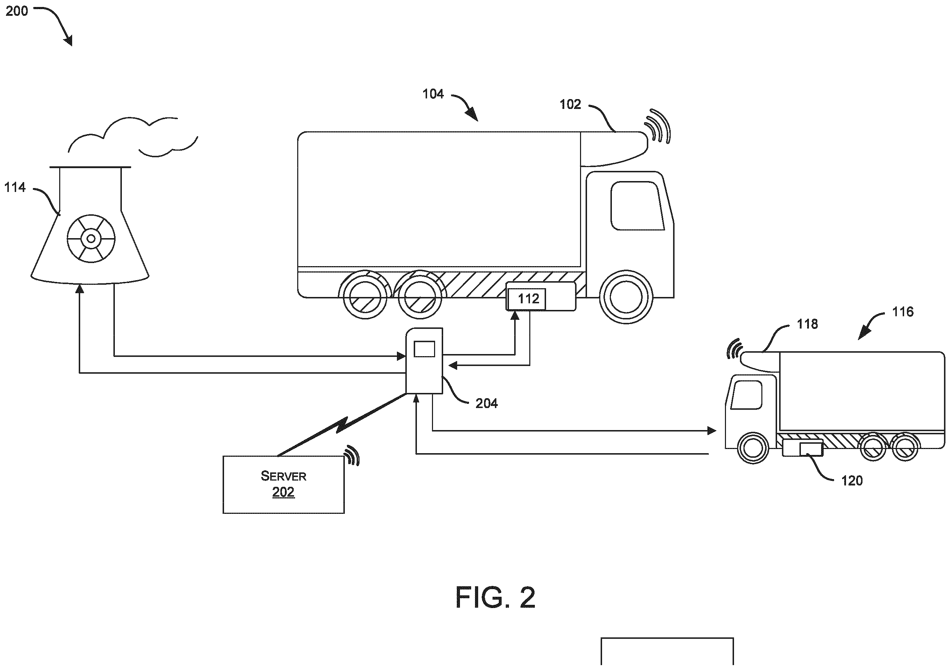

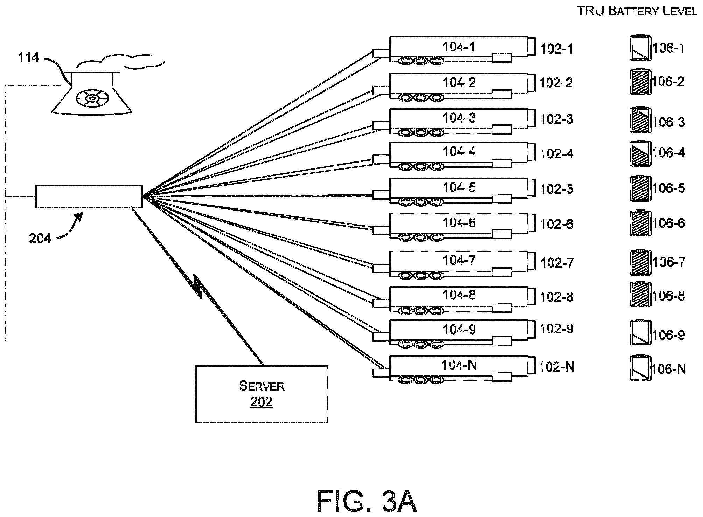

Referring to FIGs. 2 to 3B, a system 200 for enabling bi-directional charging in two or more transport refrigeration units is disclosed. The system 200 may include a central server 202 and two or more TRUs 102-1 to 102-N (collectively referred to as TRU 102, herein) where each TRU 102 comprises a battery 106, a BMS 108, a controller 110, and a bi-directional charger 112 operatively connected to the BMS 108 and the controller 110 as explained in the above-mentioned paragraphs. The TRUs 102-1 to 102-N may be installed in containers/trailers 104-1 to 104-N (collectively referred to as containers or trailers 104, herein). The controller 110 associated with each of the TRUs 102 may be in communication with the server 202 via a network. Further, the bi-directional charger 112 associated with each of the TRUs 102 may be adapted to be electrically connected to the bi-directional charger 112 or the BMS 108 associated with the remaining TRUs. Furthermore, in one or more embodiments, the bi-directional charger 112 of the TRU 102 may be adapted to be electrically connected to an external electrical component selected from a group comprising an electrical grid 114 associated with one or more electrical power entities, and an external battery associated with other non-TRU equipped vehicles.

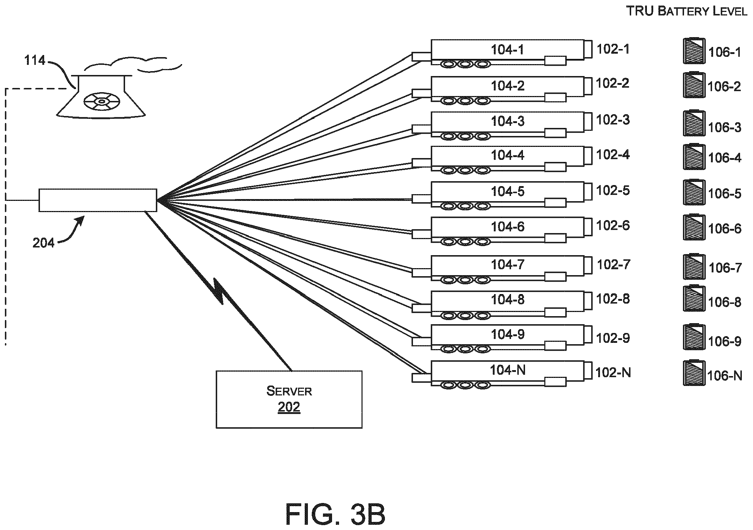

The server 202 may be configured to operate the bi-directional charger 112 of the TRUs 102 in a first mode or a second mode. In the first mode, the bi-directional charger 112 of the TRU 102 may enable the battery 106 of the corresponding TRU 102 to receive electrical power from one or more of the electrical grid 114, the battery 106 associated with any of the remaining TRUs 102, and the external battery. Further, in the second mode, the bi-directional charger 112 of the TRU 102 may enable the battery 106 of the corresponding TRU 102 to supply electrical power to one or more of the electrical grid 114, the battery 106 associated with any of the remaining TRUs 102, and the external battery. For instance, as shown in FIGs. 3A and 3B, the bi-directional charger 112 associated with any of the TRU 102-2, 102-5, 102-6 may be electrically connected to the battery 106 or bi-directional charger 112 of any of the TRU 102-1, 102-9. Accordingly, the TRU 102-2, 102-5, 102-6 may be operated in the first mode and the TRU 102-1, 102-9 may be operated in the second mode to enable the transfer of electrical power from the TRU 102-2, 102-5, 102-6 to TRU 102-1, 102-9.

In one or more embodiments, the bi-directional charger 112 associated with the TRUs 102 of the system 100 may be adapted to be operatively connected to one or more legacy TRUs that may include only a BMS and/or a unidirectional charger (without any bi-directional charger 112). In such embodiments, the TRUs 102 having the bi-directional charger 112 may be configured to transfer electrical power from the battery 106 of the corresponding TRU 102 to the battery of the legacy TRUs, however, the TRUs 102 having the bi-directional charger 112 may not receive electrical power from the battery of the legacy TRUs.

In one or more embodiments, the non-TRU vehicles (having the external/third battery) may include a unidirectional charger. In such embodiments, the bi-directional charger 112 of the TRU 102 may be able to supply electrical power to the unidirectional charger or the external/third battery of the non-TRU vehicles, however, the unidirectional charger of the non-TRU vehicles may not be able to supply electrical power to the battery 106 of the TRUs 102. However, in one or more embodiments, the non-TRU vehicles (having the external/third battery) may also include a bi-directional charger. In such embodiments, the bi-directional charger 112 of the TRU 102 may be configured to supply electrical power to the external/third battery of the non-TRU vehicles and the bi-directional charger of the non-TRU vehicles may also be configured to supply electrical power to the battery 106 of the TRUs 102.

In one or more embodiments, the BMS 108 of the TRUs 102 may be configured to monitor the battery level of the corresponding TRU 102 and transmit the monitored data to the server 202 in real-time. Further, in one or more embodiments, when the TRU 102 or containers 104 equipped with the TRU 102 are at a docking station with their battery 106 or the bi-directional charger 112 connected to a common charging station 204, the server 202 and the charging station 204 may enable the transfer of electrical power between the batteries of the TRUs 102, based on the battery level associated with each of the TRU 102, thereby creating a balance between the battery level of the TRUs 102 as shown in FIG. 3B. In addition, in one or more embodiments, the common charging station 204 may be further electrically connected to the electric grid 114, which may allow the server 202 to enable the transfer of electrical power between each of the batteries of the TRUs 102 as well as between the batteries of the TRUs 102 and the electrical grid 114.

The system 100 may further include one or more human-machine interface (HMI) devices 122 associated with users of the TRUs 102, the non-TRU vehicles, and the electrical power entities. In one or more embodiments, the HMI device 122 may be a mobile phone, a handheld device comprising an input device and a display device, a computing device comprising an input device and a display device, and a touchscreen-enabled computing device, but is not limited to the like. The HMI device 122, the controller 110 of the TRUs 102, the non-TRU vehicles, and the server 202 may include a communication module to communicatively couple the HMI device 122 to the controller 110 and BMS 108 of the TRU 102 and further communicatively couple the HMI device 122 to the server 202 via the network.

In one or more embodiments, the first HMI device 122 associated with the first users of the TRUs 102 may enable the first users to monitor the battery level of the battery associated with the first TRU 106 of their TRU 102 (first TRU 102) and further monitor the battery level of the second battery 120 associated with other TRUs 118 (second TRU 118) and/or the third battery of the vehicles when the second battery 120 or the third battery are electrically connected to the bi-directional charger 112 of the first TRU 102. Further, the first HMI device 122 may allow the first users to switch the bi-directional charger 112 of their first TRU 102 between the first mode and the second mode. The TRUs 102 having a battery level below a first level or operating in the first mode may be designated as a first set of TRUs 102. Further, the TRUs 102 having a battery level above the first level operating in the second mode may be designated as the second set of TRUs 102, herein. As illustrated in FIG. 3A, the TRUs 102-2 to 102-8 may be the second set of TRUs, and the TRUs 102-1, 102-9, and 102-N may be the first set of TRUs.

In one or more embodiments, the server 202 may enable the first users associated with the first set of TRUs 102-1, 102-9, and 102-N to transmit, using the first HMI device 122, a first set of signals to a second HMI device of second users associated with the second set of TRU 102-2 to 102-8. The first set of signals may be indicative of the location of the corresponding first TRU 102-1, 102-9, and 102-N and a request for supplying the electrical power from the battery 106-1, 106-9, 106-N of the corresponding first TRU 102-1, 102-9, and 102-N to the battery 106-2 to 106-8 of the corresponding second TRU 102-2 to 102-8. The server 202 may further enable the second users to transmit, using the second HMI device, a second set of signals to the first HMI device 122. The second set of signals may be indicative of the location of the corresponding second TRU 102-2 to 102-8 and confirmation for supplying the electrical power in response to the request. Accordingly, either the first user may bring the first TRU 102-1, 102-9, and 102-N to the location of any of the second users/second TRUs 102-2 to 102-8 to get the battery associated with the first TRU 106 charged, or the first user may request the second user to reach the location of the first users/first TRU 102-1, 102-9, and 102-N to charge the battery associated with the first TRU 106-1, 106-9, and 106-N.

In one or more embodiments, the server 202 may enable the first users associated with the first set of TRUs 102-1, 102-9, and 102-N to transmit, using the first HMI device 122, a third set of signals to one or more third HMI devices associated with the one or more electrical power entities and a third user associated with the one or more non-TRU vehicles. The third set of signals may be indicative of a request for supplying electrical power from the electrical grid 114 and/or the external battery of the non-TRU vehicles to the battery associated with the first TRU 106-1, 106-9, and 106-N of the TRUs 102-1, 102-9, and 102-N. The server 202 may further enable the electrical power entities and/or the third users associated with the vehicles to transmit, using third HMI devices, a fourth set of signals to the first HMI device 122 of the first TRU 102-1, 102-9, and 102-N. The third set of signals may be indicative of the location of the electrical grid 114 and/or the vehicle, and confirmation for supplying the electrical power in response to the request. Accordingly, either the first user may bring the first TRU 102-1, 102-9, and 102-N to the electric grid 114 or the location of any of the third user/non-TRU vehicle to get the battery associated with the first TRU 106-1, 106-9, and 106-N charged, or the first user may request the third user to reach the location of the first user/first TRU 102-1, 102-9, and 102-N to charge the battery associated with the first TRU 106-1, 106-9, and 106-N

Thus, this invention overcomes the drawbacks, and limitations associated with the existing battery-powered TRUs, by providing an improved, cost-effective, and efficient battery charging system for battery-powered TRUs, which enables the TRU to receive electrical power from an electrical grid as well as the battery associated with other TRUs and non-TRU vehicles. The invention further allows the TRU to resell or supply the electrical power (stored in the battery) to the electric grid and/or the battery associated with other TRUs and non-TRU vehicles.

While the invention has been described with reference to exemplary embodiments, it will be understood by those skilled in the art that various changes may be made without departing from the scope of the invention as set out in the appended claims. Modifications may be made to adopt a particular situation or material to the teachings of the inveniton without departing from the scope thereof. Therefore, it is intended that the invention not be limited to the particular embodiment disclosed, but that the invention includes all embodiments falling within the scope of the invention as set out in the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A bi-directional battery charging system (100) for a first transport refrigeration unit (TRU) (102), the bi-directional battery charging system comprising:
a bi-directional charger (112) operatively connected to a controller (110) and a battery (106) associated with the first TRU,
wherein the bi-directional charger is configured to be electrically connected to an external electrical component selected from the group of an electrical grid (114), a battery (120) associated with a second TRU (118), a battery associated with vehicles, and a combination thereof.

2. The bi-directional battery charging system (100) of claim 1, wherein, in a first mode, the bi-directional charger (112) enables supply of electrical power from the external electrical component to the battery (106) associated with the first TRU (102); and/or
wherein, in a second mode, the bi-directional charger (112) enables supply of electrical power from the battery (106) associated with the first TRU (102) to the external electrical component.

3. The bi-directional battery charging system (100) of any of claims 1 and 2, wherein the bi-directional charger (112) comprises:
an AC to DC (ADC) converter configured to convert AC electrical power received from the external electrical component into DC electrical power for the battery (106) associated with the first TRU (102); and
a DC to AC (DAC) converter configured to convert DC electrical power supplied by the battery associated with the first TRU into AC electrical power for the external electrical component.

4. The bi-directional battery charging system (100) of any preceding claim, wherein the bi-directional charger (112) comprises one or more AC to AC converters configured to:
convert AC electrical power having first electrical attributes being received from the external electrical component into AC electrical power having second electrical attributes for the battery (106) associated with the first TRU (102); and
convert AC electrical power having the second electrical attributes supplied by the battery associated with the first TRU into AC electrical power having first electrical attributes for the external electrical component.

5. The bi-directional battery charging system (100) of any preceding claim, wherein the bi-directional charger (112) comprises one or more DC to DC converters configured to:
convert DC electrical power having first electrical attributes being received from the external electrical component into DC electrical power having second electrical attributes for the battery (106) associated with the first TRU (102); and
convert DC electrical power having the second electrical attributes supplied by the battery associated with the first TRU into DC electrical power having first electrical attributes for the external electrical component.

6. The bi-directional battery charging system (100) of any preceding claim, wherein the bi-directional battery charging system comprises a battery management system BMS (108) associated with the TRU (102), wherein the BMS comprises a DAC converter configured to convert DC electrical power supplied by the bi-directional charger (112) into AC electrical power for one or more components of the first TRU and the battery (106) associated with the first TRU.

7. The bi-directional battery charging system (100) of claim 6, wherein the BMS (108) comprises an ADC converter to convert AC electrical power supplied by the bi-directional charger (112) into DC electrical power for one or more components of the TRU (102) and the battery (106) associated with the first TRU; and/or
wherein the BMS (108) comprises one or more sensors to:
monitor a battery level of the battery associated with the first TRU (102); and
monitor a battery level of the battery associated with the external electrical component when electrically connected to the bi-directional charger (112) of the TRU.

8. The bi-directional battery charging system (100) of any of claims 6 and 7, wherein the BMS (108) of the TRU (102) is communicatively coupled to a first human-machine interface HMI device (122) associated with a user of the first TRU, wherein the first HMI device enables the user of the first TRU to:
monitor the battery level of the battery (106) associated with the first TRU:
monitor the battery level of the external electrical component; and
switch the bi-directional charger (112) between the first mode and the second mode.

9. The bi-directional battery charging system (100) of claim 8, wherein the first HMI device (122) enables the user of the first TRU (102) to:
transmit, to a second HMI device associated with a user of the external electrical component, a first set of signals pertaining to a request for supplying electrical power from the external electrical component to the battery associated with the first TRU; and/or
receive, from the second HMI device, a second set of signals pertaining to a request for supplying electrical power from the battery associated with the first TRU to the external electrical component.

10. A system (200) for enabling bi-directional charging in two or more transport refrigeration units TRUs (102), the system comprising:
a server (202); and
two or more TRUs, each comprising a battery (106), a controller (110), and a bi-directional charger (112) operatively connected to the battery and the controller, wherein the controller associated with each of the two or more TRUs is in communication with the server,
wherein the bi-directional charger associated with each of the two or more TRUs is configured to be electrically connected to the bi-directional charger associated with the remaining TRUs.

11. The system (200) of claim 10, wherein the bi-directional charger (112) of each of the two or more TRUs (102) is configured to be electrically connected to an external electrical component selected from an electrical grid (114), a battery (106) associated with a vehicle, and a combination thereof.

12. The system (200) of any of claims 10 and 11, wherein the server (202) is configured to operate the bi-directional charger (112) of the two or more TRUs (102) in a first mode, wherein the bi-directional charger enables the battery (106) of the corresponding TRU to receive electrical power from the external electrical component, the battery associated with any of the remaining TRUs, or both; and/or
wherein the server (202) is configured to operate the bi-directional charger (112) of the two or more TRUs (102) in a second mode, wherein the bi-directional charger enables the battery (106) of the corresponding TRU to supply electrical power to the external electrical component, the battery associated with any of the remaining TRUs, or both.

13. The system (200) of any of claims 10 to 12, wherein the server (202) is in communication with a battery management system (108) of the TRU (102) and configured to monitor battery level associated with each of the two or more TRUs,
wherein the server enables the transfer of electrical power between the two or more TRUs at a charging station (204), based on the battery level associated with each of the two or more TRUs.

14. The system (200) of any of claims 10 to 13, wherein the server (202) enables a first HMI device (122) associated with a user of a first set of TRUs (102) among the two or more TRUs having the battery level above a first level to:
transmit, to a second HMI device of a user associated with a second set of TRUs among the two or more TRUs having the battery level below the first level, a first set of signals pertaining to a location of the corresponding first TRU, and a request for supplying the electrical power from the battery of the corresponding first TRU to the battery of the corresponding second TRU,
optionally wherein the server (202) enables the second HMI device associated with the second set of TRUs, to transmit a second set of signals pertaining to a location of the corresponding second TRU, and a confirmation for supplying the electrical power in response to the request.

15. The system (200) of claim 14, wherein the server (202) enables the first HMI device (122) associated with the first set of TRUs (102) to:
transmit, to one or more third HMI devices associated with the external electrical component, a third set of signals pertaining to a request for supplying electrical power from the external electrical component to the battery (106) associated with the first TRU; and/or
receive, from the one or more third HMI devices, a fourth set of signals pertaining to a location of the external electrical component and a confirmation for supplying the electrical power in response to the request.
